# EUROPEAN PATENT SPECIFICATION

(11) **EP 1 653 490 B1**
(45) Date of publication and mention of the grant of the patent: **15.08.2007**
(21) Application number: 04256649.7
(22) Date of filing: 27.10.2004
(51) Int. Cl.: H01H 19/10, G05G 5/06, G05G 1/08

(54) **Rotary tactile feedback apparatus for a switch**
Drehbare Haptik für einen Schalter
Haptique rotative pour un commutateur

(43) Date of publication of application: 03.05.2006
(73) Proprietor: Delphi Technologies, Inc., Troy, MI 48007 (US)
(72) Inventor: Formoso, Jean-Luc, 6791 Athus (BE)
(74) Representative: Jones, Keith William

(56) References cited:
- DE-A1- 3 236 531
- DE-B- 1 029 908
- DE-C- 696 991
- DE-C1- 19 505 737
- US-A- 2 155 594

## Description

The present invention relates to a rotary tactile feedback apparatus for a multi-position switch or encoder, in particular for an automotive control switch.

Modern vehicles are fitted with increasing levels of equipment and features which require control inputs from the driver, such as air conditioning controls, audio equipment, light switches and other driving controls. The control interface between the driver and the vehicle is very important in terms of driver comfort and in providing the driver with an impression of the overall quality of the vehicle. As such, the tactile feel of the switches and controls of the vehicle is of great importance.

Rotary controls are usually provided with a number of detents defining discrete switch positions and to prevent continuously variable intermediate positions. Such detents are commonly provided by a spring loaded ball which is axially biased against a track provided with a plurality of apertures or recesses into which the ball can sit, each aperture being associated with a discrete switch position (e.g. DE 3236531).

The feel of such rotary controls can be enhanced by providing a degree of resistance to movement of the switch as it is moved between the discrete switch positions. Such resistance to movement can be provided by a stylus that is perpendicularly biased against a detented surface. Such provides a feel similar to that of a Hi-Fi audio device and thus provides an enhanced feeling of quality.

However, the provision of additional tactile feedback devices increases the cost, complexity and space requirements of the switch. The object of the present invention is to provide a tactile feedback apparatus for a multi-position switch that provides enhanced feel while minimising the complexity, cost and space requirements of the switch.

According to the present invention there is provided a rotary tactile feedback apparatus for a multi-position switch or encoder, the apparatus comprising a housing, a rotary member rotatably mounted on the housing, a first detented surface comprising a plurality of discrete projections and/or recesses to define a plurality of discrete switch positions of the rotary member and a second detented surface defining a plurality of projections and/or grooves to provide a stepped resistance to movement of said rotary member during rotation between said discrete switch positions, said first and second detented surfaces being provided on one of the housing or the rotary member, at least one stylus means being provided on the other of the housing or the rotary member, said stylus means being biased against said first and second detented surfaces.

Preferably the first and second detented surfaces are provided on one or more circumferential tracks on one of the housing or the rotary member, the stylus means being radially biased against the first and second detented surfaces

Preferably the biasing means comprises a single leaf spring, although other biasing means, such as compression springs, are envisaged. Preferably the or each stylus means are integrally formed on said leaf spring or are defined by one or more free distal end portions of the leaf spring. The leaf spring may be formed of metal or from some other suitably resilient material, such as plastic.

Preferably the stylus means comprises first and second stylus members, said first stylus member cooperating with the first detented surface and the second stylus member cooperating with the second detented surface.

In one embodiment, both said first and second detented surfaces may be provided around a circumferential track provided on a surface of one of the rotary member or the housing, said grooves and/or ridges of the second detented surface being provided on the regions of said circumferential track between the projections and/or recesses of the first detented surface. The circumferential track having the first and second detented surfaces formed thereon may be provided on an outer surface of the rotary member, a leaf spring extending tangentially to the circumferential track and having a base end mounted on the housing and a free distal end, said stylus means being provided at or adjacent the free distal end of the leaf spring whereby said stylus means is radially biased against the first and second detented surfaces.

In a second embodiment the first and second detented surfaces may comprise parallel circumferential tracks provided around a surface of one of the rotary member or the housing. The parallel circumferential tracks having the first and second detented surfaces formed thereon may be provided on an outer surface of a portion of the rotary member, a leaf spring extending substantially tangentially to said circumferential tracks and having a base end mounted on the housing and being divided into two parallel elongate portions separated by a slot or cut-out region extending from said base end, the stylus means comprising first and second stylus members provided at or adjacent respective distal ends of said parallel elongate portions, whereby the first stylus member is radially biased against the first detented surface and the second stylus member is radially biased against the second detented surface.

Embodiments of the invention will now be described, by way of example only, with reference to the following drawing.

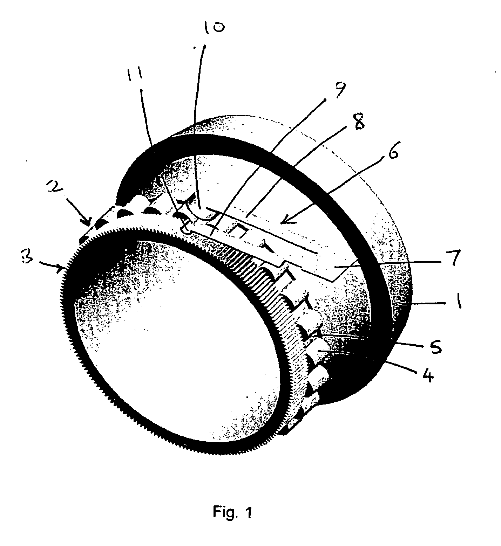

Figure 1 shows a rotary tactile feedback apparatus according to the invention for use with a rotary control switch for a vehicle. The apparatus comprises a rotary knob 1 rotatably mounted on a housing (omitted for clarity). Parallel circumferential tracks are provided, side by side, on the outer peripheral surface of the rotary knob having first and second detented surfaces 2,3 formed thereon.

The first detented surface 2 has a plurality of barrel shaped projections 4 formed thereon, separated by valleys 5 to define a plurality of discrete switch positions of the rotary knob 1.

The second detented surface 3 has a plurality of fine ridges and valleys formed thereon in the manner of splines.

A metal leaf spring 6 is mounted on the housing at a base end 7 to extend tangentially to the first and second detented surfaces of the rotary knob 1. The leaf spring 6 is separated into two elongate arms 8,9 by a slot extending from the base end 7, the free end of each arm 8,9 terminating in a stylus 10,11. Stylus 10 is radially biased against the first detented surface 2 to define a plurality of positive stops corresponding to the discrete switch positions of the rotary knob. Stylus 11 is radially biased against the second detented surface 3 to provide a stepped resistance to movement of the rotary knob.

In use, the first detented surface 2 and associated stylus 10 provides positive stop positions corresponding to the discrete switch positions of the rotary knob while the second detented surface 3 and associated stylus 11 provide a background tactile feeling, similar to that of the control knobs of a quality Hi-Fi, to movement of the rotary knob between its discrete switch positions by providing stepped resistance to rotation of the rotary knob 1.

In an alternative embodiment (not shown), the fine ridges and valleys of the second detented surface are provided between the valleys of the first detented surface (for example on the outer surfaces of the barrel shaped projections of the first detented surfaces) such that both the first and second detented surfaces are provided on a single circumferential track around the periphery of the rotary knob. In such embodiment only one stylus would be required and thus arm 9 of the leaf spring 6 could be omitted, further reducing the cost, complexity and space requirements of the apparatus.

## Claims

1. A rotary tactile feedback apparatus for a multi-position switch or encoder, the apparatus comprising a housing, a rotary member (1) rotatably mounted on the housing, a first detented surface (2) comprising a plurality of discrete projections and/or recesses to define a plurality of discrete switch positions of the rotary member and a second detented surface (3) defining a plurality of projections and/or grooves , said first and second detented surfaces being provided on one of the housing or the rotary member, at least one stylus means (10,11) being provided on the other of the housing or the rotary member (1), said stylus means (10,11) being biased against said first and second detented surfaces (2,3) **characterised by** said second detented surface (3) to providing a stepped resistance to movement of said rotary member during rotation between said discrete switch positions.

2. An apparatus as claimed in claim 1, wherein the first and second detented surfaces (2,3) are provided on one or more circumferential tracks on one of the housing or the rotary member (1), the stylus means (10,11) being radially biased against the first and second detented surfaces (2,3).

3. An apparatus as claimed in claim 1 or claim 2, wherein said biasing means comprises a single leaf spring (6).

4. An apparatus as claimed in claim 3, wherein the or each stylus means (10,11) are integrally formed on said leaf spring (6) or are defined by one or more free distal end portions of the leaf spring.

5. An apparatus as claimed in claim 3 or claim 4, wherein the leaf spring (6) is formed of metal.

6. An apparatus as claimed in any preceding claim, wherein the stylus means (10,11) comprises first and second stylus members, said first stylus member (10) cooperating with the first detented surface (2) and the second stylus member (11) cooperating with the second detented surface (3).

7. An apparatus as claimed in any preceding claim, wherein both said first and second detented surfaces (2,3) are provided around a single circumferential track provided on a surface of one of the rotary member (1) or the housing, said grooves and/or ridges of the second detented surface (3) being provided on regions of said circumferential track between projections and/or recesses of the first detented surface (2).

8. An apparatus as claimed in claim 7 when dependent upon any of claims 2 to 6, wherein the circumferential track having the first and second detented surfaces (2,3) formed thereon is provided on an outer surface of the rotary member (1), the leaf spring (6) extending tangentially to the circumferential track and having a base end mounted on the housing and a free distal end, said stylus means (10, 11) being provided at or adjacent the free distal end of the leaf spring whereby said stylus means (10,11) is radially biased against the first and second detented surfaces.

9. An apparatus as claimed in any of claims 1 to 6, wherein said first and second detented surfaces (2,3) comprise parallel circumferential tracks provided around a surface of one of the rotary member (1) or the housing.

10. An apparatus as claimed in claim 9 when dependent upon any of claims 2 to 6, wherein the parallel circumferential tracks having the first and second detented surfaces (2,3) formed thereon are provided on an outer surface of a portion of the rotary member (1), the leaf spring (6) extending substantially tangentially to said circumferential tracks and having a base end mounted on the housing and being divided into two parallel elongate portions (8,9) separated by a slot or cut-out region extending from said base end, the stylus means comprising first and second stylus members (10, 11) being provided at or adjacent respective distal ends of said parallel elongate portions (8,9), whereby the first stylus member (10) is radially biased against the first detented surface (2) and the second stylus member (11) is radially biased against the second detented surface (3).

11. A multi-position switch having a rotary tactile feedback apparatus as claimed in any preceding claim.

## Patentansprüche

1. Eine drehbare taktile Rückführungsvorrichtung für einen Reihen-Positionsschalter oder einen Reihen-Positions-Kodierer, wobei die Vorrichtung ein Gehäuse, ein drehbares Element (1), das drehend auf dem Gehäuse montiert ist, eine erste Rasteroberfläche (2), die eine Vielzahl von diskreten Fortsätzen und/oder Vertiefungen beinhaltet, um eine Vielzahl von diskreten Schalterpositionen des drehbaren Elements zu definieren, und eine zweite Rasteroberfläche (3), die eine Vielzahl von Fortsätzen und/oder Rillen definiert, beinhaltet, wobei die erste und die zweite Rasteroberfläche auf einem von dem Gehäuse oder dem drehbaren Element bereitgestellt ist, wobei mindestens ein Tastermittel (10, 11) auf dem anderen von dem Gehäuse oder dem drehbaren Element (1) bereitgestellt ist, wobei das Tastermittel (10, 11) gegen die erste und die zweite Rasteroberfläche (2, 3) vorgespannt ist, **dadurch gekennzeichnet, dass** die zweite Rasteroberfläche (3) während der Drehung zwischen den diskreten Schalterpositionen einen Stufenwiderstand gegen die Bewegung des drehbaren Elements bereitstellt.

2. Vorrichtung gemäß Anspruch 1, wobei die erste und die zweite Rasteroberfläche (2, 3) auf einer oder mehreren Umfangsbahnen auf einem von dem Gehäuse oder dem drehbaren Element (1) bereitgestellt sind, wobei das Tastermittel (10, 11) radial gegen die erste und die zweite Rasteroberfläche (2, 3) vorgespannt ist.

3. Vorrichtung gemäß Anspruch 1 oder Anspruch 2, wobei das Vorspannmittel eine einzige Blattfeder (6) beinhaltet.

4. Vorrichtung gemäß Anspruch 3, wobei das oder jedes Tastermittel (10, 11) integral auf der Blattfeder (6) geformt ist, oder durch einen oder mehrere freie distale Endabschnitte der Blattfeder definiert ist.

5. Vorrichtung gemäß Anspruch 3 oder Anspruch 4, wobei die Blattfeder (6) aus Metall gebildet ist.

6. Vorrichtung gemäß einem der vorhergehenden Ansprüche, wobei das Tastermittel (10, 11) ein erstes und ein zweites Tasterelement beinhaltet, wobei das erste Tasterelement (10) mit der ersten Rasteroberfläche (2) zusammenwirkt und das zweite Tasterelement (11) mit der zweiten Rasteroberfläche (3) zusammenwirkt.

7. Vorrichtung gemäß einem der vorhergehenden Ansprüche, wobei sowohl die erste als auch die zweite Rasteroberfläche (2, 3) um eine einzige Umfangsbahn, die auf einer Oberfläche von einem von dem drehbaren Element (1) oder dem Gehäuse bereitgestellt ist, bereitgestellt sind, wobei die Rillen und/oder die Erhöhungen der zweiten Rasteroberfläche (3) auf Bereichen der Umfangsbahn zwischen den Fortsätzen und/oder den Vertiefungen der ersten Rasteroberfläche (2) bereitgestellt sind.

8. Vorrichtung gemäß Anspruch 7, wenn abhängig von einem der Ansprüche 2 bis 6, wobei die Umfangsbahn, die die darauf gebildete erste und zweite Rasteroberfläche (2, 3) aufweist, auf einer äußeren Oberfläche des drehbaren Elements (1) bereitgestellt ist, wobei sich die Blattfeder (6) tangential zu der Umfangsbahn erstreckt und ein auf dem Gehäuse montiertes Basisende und ein freies distales Ende aufweist, wobei das Tastermittel (10, 11) an oder angrenzend an das freie distale Ende der Blattfeder bereitgestellt ist, wobei das Tastermittel (10, 11) radial gegen die erste und die zweite Rasteroberfläche vorgespannt ist.

9. Vorrichtung gemäß einem der Ansprüche 1 bis 6, wobei die erste und die zweite Rasteroberfläche (2, 3) parallele Umfangsbahnen, die um eine Oberfläche von einem von dem drehbaren Element (1) oder dem Gehäuse bereitgestellt sind, beinhalten.

10. Vorrichtung gemäß Anspruch 9, wenn abhängig von einem der Ansprüche 2 bis 6, wobei die parallelen Umfangsbahnen, die die darauf gebildete erste und zweite Rasteroberfläche (2, 3) aufweisen, auf einer äußeren Oberfläche eines Abschnitts des drehbaren Elements (1) bereitgestellt sind, wobei sich die Blattfeder (6) im Wesentlichen tangential zu den Umfangsbahnen erstreckt und ein auf dem Gehäuse montiertes Basisende aufweist und in zwei parallele verlängerte Abschnitte (8, 9) unterteilt ist, die durch einen Schlitz oder einen ausgeschnittenen Bereich, der sich von dem Basisende erstreckt, getrennt sind, wobei das Tastermittel ein erstes und ein zweites Tasterelement (10, 11) beinhaltet, die an oder angrenzend an die entsprechenden distalen Enden der parallelen verlängerten Abschnitte (8, 9) bereitgestellt sind, wobei das erste Tasterelement (10) radial gegen die erste Rasteroberfläche (2) vorgespannt ist und das zweite Tasterelement (11) radial gegen die zweite Rasteroberfläche (3) vorgespannt ist.

11. Ein Reihen-Positionsschalter, der eine drehbare taktile Rückführungsvorrichtung gemäß einem der vorhergehenden Ansprüche aufweist.

## Revendications

1. Un appareil de retour tactile rotatif pour un commutateur ou un encodeur à positions multiples, l'appareil comprenant un logement, un élément rotatif (1) monté sur le logement de façon à ce qu'il puisse tourner, une première surface à crans (2) comprenant une pluralité de saillies et/ou de renfoncements discrets pour définir une pluralité de positions de commutation discrètes de l'élément rotatif et une deuxième surface à crans (3) définissant une pluralité de saillies et/ou de rainures, ladite première surface à crans et ladite deuxième surface à crans étant fournies sur soit le logement, soit l'élément rotatif, au moins un moyen formant pointe (10, 11) étant fourni sur l'autre parmi le logement ou l'élément rotatif (1), ledit moyen formant pointe (10,11) étant décalé contre ladite première surface à crans et ladite deuxième surface à crans (2, 3) **caractérisé en ce que** ladite deuxième surface à crans (3) fournit une résistance à étage au déplacement dudit élément rotatif lors de la rotation entre lesdites positions de commutation discrètes.

2. Un appareil tel que revendiqué dans la revendication 1, dans lequel la première surface à crans et la deuxième surface à crans (2, 3) sont fournies sur une ou plusieurs voies circonférentielles sur soit le logement, soit l'élément rotatif (1), le moyen formant pointe (10, 11) étant décalé radialement contre la première surface à crans et la deuxième surface à crans (2, 3).

3. Un appareil tel que revendiqué dans la revendication 1 ou la revendication 2, dans lequel ledit moyen de décalage comprend un ressort à une lame (6).

4. Un appareil tel que revendiqué dans la revendication 3, dans lequel le moyen formant pointe ou chaque moyen formant pointe (10, 11) sont formés de façon solidaire sur ledit ressort à lame (6) ou sont définis par une ou plusieurs portions d'extrémité distale libre du ressort à lame.

5. Un appareil tel que revendiqué dans la revendication 3 ou la revendication 4, dans lequel le ressort à lame (6) est formé en métal.

6. Un appareil tel que revendiqué dans n'importe quelle revendication précédente, dans lequel le moyen formant pointe (10, 11) comprend un premier élément formant pointe et un deuxième élément formant pointe, ledit premier élément formant pointe (10) coopérant avec la première surface à crans (2) et le deuxième élément formant pointe (11) coopérant avec la deuxième surface à crans (3).

7. Un appareil tel que revendiqué dans n'importe quelle revendication précédente, dans lequel à la fois ladite première surface à crans et ladite deuxième surface à crans (2, 3) sont fournies autour d'une seule voie circonférentielle fournie sur une surface de soit l'élément rotatif (1), soit le logement, lesdites rainures et/ou arêtes de la deuxième surface à crans (3) étant fournies sur des régions de ladite voie circonférentielle entre les saillies et/ou les renfoncements de la première surface à crans (2).

8. Un appareil tel que revendiqué dans la revendication 7 lorsqu'elle dépend de n'importe lesquelles des revendications 2 à 6, dans lequel la voie circonférentielle ayant la première surface à crans et la deuxième surface à crans (2, 3) formées sur celle-ci est fournie sur une surface externe de l'élément rotatif (1), le ressort à lame (6) s'étendant tangentiellement à la voie circonférentielle et ayant une extrémité de base montée sur le logement et une extrémité distale libre, ledit moyen formant pointe (10, 11) étant fourni au niveau ou de façon adjacente à l'extrémité distale libre du ressort à lame grâce à quoi ledit moyen formant pointe (10, 11) est radialement décalé contre la première surface à crans et la deuxième surface à crans.

9. Un appareil tel que revendiqué dans n'importe lesquelles des revendications 1 à 6, dans lequel ladite première surface à crans et ladite deuxième surface à crans (2, 3) comprennent des voies circonférentielles parallèles fournies autour d'une surface soit de l'élément rotatif (1), soit du logement.

10. Un appareil tel que revendiqué dans la revendication 9, lorsqu'elle dépend de n'importe lesquelles des revendications 2 à 6, dans lequel les voies circonférentielles parallèles ayant la première surface à crans et la deuxième surface à crans (2, 3) formées sur celles-ci sont fournies sur une surface externe d'une portion de l'élément rotatif (1), le ressort à lame (6) s'étendant substantiellement tangentiellement auxdites voies circonférentielles et ayant une extrémité de base montée sur le logement et étant divisé en deux portions allongées parallèles (8, 9) séparées par une fente ou une région découpée s'étendant de ladite extrémité de base, le moyen formant pointe comprenant des premier et des deuxième éléments formant pointe (10, 11) étant fournis au niveau ou de façon adjacente aux extrémités distales respectives desdites portions allongées parallèles (8, 9), grâce à quoi le premier élément formant pointe (10) est radialement décalé contre la première surface à crans (2) et le deuxième élément formant pointe (11) est radialement décalé contre la deuxième surface à crans (3).

11. Un commutateur à positions multiples ayant un appareil de retour tactile rotatif tel que revendiqué dans n'importe quelle revendication précédente.
